# EUROPÄISCHE PATENTANMELDUNG

(11) **EP 4 804 030 A1**
(43) Veröffentlichungstag der Anmeldung: **09.09.2026**
(21) Anmeldenummer: 26152067.0
(22) Anmeldetag: 15.01.2026
(51) Int. Cl.: G06F 9/52, G06F 9/54, G06F 15/167, G06F 15/173

(54) **MEHRKERNPROZESSOR UND VERFAHREN ZUM BETREIBEN EINES MEHRKERNPROZESSORS IN EINEM LUFTFAHRZEUG**

(30) Priorität: 06.03.2025 DE 102025108497
(71) Anmelder: Liebherr-Aerospace Lindenberg GmbH, 88161 Lindenberg (DE)
(72) Erfinder: DIEUDONNÉ, Laurent, 6951 Lingenau (AT); DEDLER, Thomas, 88161 Lindenberg (DE)
(74) Vertreter: Lorenz Seidler Gossel Part. mbB

(57) **Zusammenfassung**

Die Erfindung betrifft einen Mehrkernprozessor, insbesondere zum Betreiben einer Steuerkomponente eines Luftfahrzeugs, der mindestens einen ersten Prozessorkern zum Ausführen von Rechenoperationen, auch benannt als Applikations-Core, und mindestens einen zweiten Prozessorkern zum Ausführen von Rechenoperationen, auch benannt als Proxy-Core, umfasst, wobei der mindestens eine Applikations-Core und der mindestens eine Proxy-Core aus Sicht der Hardwarearchitektur beide eine Zugriffsmöglichkeit auf Prozessor- und/oder Hardwareressourcen besitzen, insbesondere mindestens eine Ein-/Ausgabeschnittstelle und/oder mindestens eine interne Hardware-Komponente. Die Erfindung ist dadurch gekennzeichnet, dass der mindestens eine Applikations-Core und der mindestens einen Proxy-Core jeweils mit einer Plattform-Software versehen sind, die dazu ausgelegt ist, sicherzustellen, dass die eigentlich von mindestens den beiden Prozessorkernen aus zugreifbaren Ressourcen nur von genau einem Proxy-Core aus zugreifbar sind, wobei die Plattform-Software vorgesehen ist, wenn bei einem konkurrierenden Zugreifen durch die Prozessorkerne ein deterministisches Verhalten der adressierten Ressource nicht hardwareseitig garantiert oder offensichtlich ist..

## Beschreibung

Die vorliegende Erfindung betrifft einen Mehrkernprozessor und ein Verfahren zum Betreiben eines Mehrkernprozessors in einem Luftfahrzeug.

In der modernen Luftfahrttechnik spielen Steuerungskomponenten eine zentrale Rolle, da sie die Grundlage für die sichere und effiziente Steuerung von Flugzeugen bilden. Diese Komponenten ermöglichen es, komplexe Systeme präzise zu kontrollieren und somit die Funktionalität und Zuverlässigkeit der Luftfahrzeuge zu gewährleisten. Mit dem stetigen Anstieg der Leistungsanforderungen und der Komplexität der Flugsteuerungssysteme wächst auch der Bedarf an leistungsfähigen und zuverlässigen Prozessorlösungen. Multicore-Prozessoren haben sich dabei als Schlüsseltechnologie etabliert, da sie die parallele Ausführung mehrerer Softwareanwendungen ermöglichen und somit eine höhere Rechenleistung bieten.

Der Einsatz von Multicore-Prozessoren in sicherheitskritischen Anwendungen wie der Luftfahrt stellt für sich genommen jedoch eine besondere Herausforderung dar. Insbesondere muss die Ausführung von Softwareprogrammen auf diesen Prozessoren funktional und zeitlich deterministisch erfolgen, um den strengen Anforderungen der Luftfahrtnormen, bspw. DO-178C und AMC 20-193, zu genügen. Darüber hinaus ist die Eigenschaft des "Robust Partitioning" essenziell, um eine klare Trennung und Unbeeinflussbarkeit der einzelnen Softwarepartitionen zu gewährleisten, wie sie bspw. in der Norm AMC 20-193 definiert ist.

Bisher basierten Hochleistungsplattformen in der Luftfahrttechnik, die mehrere Softwareanwendungen parallel ausführen konnten, auf leistungsstarken Singlecore-Prozessoren. Mit steigenden Leistungsanforderungen wurden mehrere Singlecore-Prozessoren parallel auf derselben Karte oder auf separaten Computern eingesetzt, was jedoch zu begrenzten Kommunikationsleistungen und steigender Komplexität führte. Die Kommunikationsleistung zwischen den Prozessoren war oft unzureichend, und die Realisierung wurde durch die steigende Anzahl an Prozessoren zunehmend komplizierter.

Die Einführung von Multicore-Prozessoren, bzw. Mehrkernprozessoren, bietet zwar eine Lösung für die gestiegenen Leistungsanforderungen, bringt jedoch neue Herausforderungen mit sich. Traditionelle Verfahren wie Asymmetric Multi-Processing (AMP), Symmetric Multi-Processing (SMP) und Hypervisor-basierte Virtualisierung sind in ihrer aktuellen Form nicht optimal für den Einsatz in sicherheitskritischen Luftfahrtsystemen geeignet. Diese Verfahren weisen Nachteile auf, die von mangelnder Synchronisation der Softwarepartitionen über Schwierigkeiten bei der Gewährleistung von funktionalem und zeitlichem Determinismus bis hin zu komplexen Validierungsprozessen reichen.

Das AMP-Verfahren ermöglicht zwar die unabhängige Ausführung von Software auf den einzelnen Kernen, jedoch fehlt eine native Koordination zwischen den Softwarepartitionen auf den verschiedenen Kernen. Dies kann zu Dateninkonsistenzen und ungeplanten Wartezeiten führen, wodurch der funktionale und zeitliche Determinismus beeinträchtigt wird. Das SMP-Verfahren hingegen erfordert SMP-fähige Betriebssysteme, die in der Regel nur auf identischen Kernen funktionieren und daher für heterogene Multicore-Prozessoren nicht geeignet sind. Zudem stellt die Erstellung und Validierung eines kerneübergreifenden Scheduling-Plans eine große Herausforderung dar.

Hypervisor-basierte Virtualisierung bietet zwar eine Trennung der Ressourcen durch virtuelle Hardwareressourcen, führt jedoch zu unvorhersehbaren Wartezeiten aufgrund von ungeplanten Zugriffssequenzen auf die realen Hardwareressourcen.

Dies erschwert die Garantie von Echtzeitreaktionen der Softwarepartitionen und beeinträchtigt die Leistungsfähigkeit des Multicore-Prozessors.

Vor diesem Hintergrund besteht ein dringender Bedarf an einem neuen Verfahren zum Betrieb von Multicore-Prozessoren in Luftfahrtsystemen, das die genannten Nachteile überwindet. Die vorliegende Erfindung zielt darauf ab, ein geeignetes Verfahren zum Betrieb eines Multicore-Prozessors, insbesondere des Texas Instruments Jacinto-7 (J7), aufzuzeigen, das die Ausführung von Softwareprogrammen auf funktional und zeitlich deterministische Weise in Übereinstimmung mit den Luftfahrtnormen DO-178C und AMC 20-193 ermöglicht. Durch die Einführung von Mechanismen zur Vermeidung oder Verringerung von Zugriffskonflikten auf gemeinsame Prozessorressourcen soll der funktionale und zeitliche Determinismus gewährleistet und auf einfache Art und Weise nachweisbar gemacht werden.

Die Erfindung trägt damit wesentlich zur Eigenschaft des "Robust Partitioning" für Multicore-Prozessor-basierte Produkte bei und stellt eine innovative Lösung für die Realisierung von hochleistungsfähigen, sicheren und zertifizierbaren Flugsteuerungssystemen dar. Sie ermöglicht den Einsatz moderner Multicore-Prozessoren in sicherheitskritischen Anwendungen der Luftfahrt und eröffnet neue Möglichkeiten für die Entwicklung zukünftiger Flugzeugsteuerungssysteme mit erhöhten Leistungsanforderungen. "Robust Partitioning" bezeichnet dabei die Fähigkeit eines Systems, verschiedene Software-Partitionen auf demselben Multicore-Prozessor so auszuführen, so dass sie sich gegenseitig nicht beeinflussen können. Dies betrifft sowohl die räumliche als auch die zeitliche Isolation der Partitionen. Software-Partitionen beinhalten Anwendungen und funktionieren wie Container, in denen diese vor externen Störungen geschützt sind und selbst keine Störungen außerhalb der Partition verursachen dürfen bzw. können. Diese Isolation ist nur mit einem entsprechend geeigneten zugrundeliegenden System (Prozessor + Plattform-Software) realisierbar.

Durch die adressierten Herausforderungen leistet die Erfindung einen Beitrag zur Weiterentwicklung der Luftfahrttechnologie und zur Erhöhung der Sicherheit und Effizienz moderner Flugzeuge. Sie stellt einen wichtigen Schritt in Richtung der Integration von fortschrittlichen Prozessorarchitekturen in sicherheitskritische Systeme dar und ebnet den Weg für innovative Anwendungen in der Flugzeugsteuerung und darüber hinaus.

Um die oben aufgeführten Nachteile zu überwinden ist ein Mehrkernprozessor vorgesehen, der die Merkmale des Anspruchs 1 aufweist. Vorteilhafte Ausgestaltungen sind dabei in den abhängigen Ansprüchen aufgeführt.

Dies gelingt durch einen Mehrkernprozessor, insbesondere zum Betreiben einer Steuerkomponente eines Luftfahrzeugs, der mindestens einen ersten Prozessorkern zum Ausführen von Rechenoperationen, auch benannt als Applikations-Core, und mindestens einen zweiten Prozessorkern zum Ausführen von Rechenoperationen, auch benannt als Proxy-Core, wobei der Applikations-Core und der Proxy-Core aus Sicht der Hardwarearchitektur beide eine Zugriffsmöglichkeit auf Prozessor- und/oder Hardwareressourcen besitzen, insbesondere eine Ein-/Ausgabeschnittstelle und/oder eine interne Hardware-Komponente, wobei der Applikations-Core und der Proxy-Core jeweils mit einer Plattform-Software versehen sind, die dazu ausgelegt ist, sicherzustellen, dass die eigentlich von mindestens den beiden Prozessorkernen aus zugreifbaren Ressourcen nur von genau einem Proxy-Core aus zugreifbar sind, wobei die Plattform-Software vorgesehen ist, wenn bei einem konkurrierenden Zugreifen durch die Prozessorkerne ein deterministisches Verhalten der adressierten Ressource nicht hardwareseitig garantiert oder offensichtlich ist.

Durch diese spezifische Architektur werden die potenziellen konfliktträchtigen Ressourcenzugriffe von den auf den verschiedenen Cores, insbesondere Applikations-Cores, ausgeführten Software-Applikationen entweder vermieden, oder so reduziert, dass diese vorhersehbar und beschränkbar sind. Infolgedessen sind die daraus resultierenden zeitlichen Interferenzen für die betreffenden Software-Applikationen begrenzt und vorhersehbar, also zeitlich determinierbar.

Die potenziellen konfliktträchtigen Ressourcenzugriffe bei oder in einem Mehrkernprozessor sind in der Regel Zugriffe auf Eingänge/Ausgänge-Schnittstellenkomponenten und interne Hardware-Komponenten, bei denen ein konkurrierender Zugriff unterschiedlicher Prozessorkerne zu einem nicht deterministischen Verhalten führen kann.

Das Grundkonzept der vorliegenden Erfindung, bzw. der Plattform-Software, basiert dabei darauf, dass gemeinsam genutzte Hardwareressourcen, bei denen der Determinismus bei konkurrierenden Zugriffen nicht durch die Hardware garantiert wird oder nicht einfach nachweisbar ist, nur von einem einzigen Core (dem sogenannten Proxy-Core) genutzt werden.

Dadurch wird sichergestellt, dass konkurrierende Zugriffe auf ein und derselben normalerweise geteilten Hardwareressource nicht mehr auftreten, sodass die damit in Verbindung stehenden Probleme wie fehlender Determinismus oder dergleichen überwunden werden.

Dies gelingt, indem die Prozessorkerne auf bestimmte Rollen und Aufgaben spezialisiert werden, wodurch die Zuordnung von Ressourcen jedem Prozessorkern eine gemeinsame deterministische Verwendung oder eine exklusive Verwendung der zugeordneten Ressourcen ermöglicht.

Nach einer vorteilhaften Ausgestaltung der vorliegenden Erfindung kann vorgesehen sein, dass der Mehrkernprozessor einen Speicher, der für einen Zugriff durch den Applikations-Core und den Proxy-Core konfiguriert ist, eine Ein-/Ausgabeschnittstelle und/oder eine interne Hardware-Komponente zum Ein- oder Ausgeben von Daten, auf die auf Grundlage einer Hardwarearchitektur des Mehrkernprozessors von dem Applikations-Core und dem Proxy-Core zugreifbar ist/sind, und einen Kommunikationsbus zum Verbinden von dem Applikations-Core, dem Proxy-Core, dem Speicher und der Ein-/Ausgabeschnittstelle und/oder der internen Hardware-Komponente, umfasst, wobei der Applikations-Core aufgrund der Plattform-Software dazu konfiguriert ist, einen direkten Zugriff des Applikations-Cores auf die Ein-/Ausgabeschnittstelle und/oder die interne Hardware-Komponente zu unterlassen und hieran gerichtete Daten an den Speicher zu leiten, und der Proxy-Core aufgrund der Plattform-Software dazu konfiguriert ist, die von dem Applikations-Core stammenden Daten vom Speicher aufzunehmen und an die Ein-/Ausgabeschnittstelle und/oder die interne Hardware-Komponente weiterzureichen, vorzugsweise wobei dem Proxy-Core und/oder dem Applikations-Core statisch dedizierte Bereiche des Speichers für den Datenaustausch zwischen den Prozessorkernen zugeordnet sind.

Der Zugriff auf die Hardwarekomponente wird also exklusiv durch den Proxy-Core durchgeführt, der von dem Applikations-Core stammenden Daten an diesen in einer Art und Weise weiterleitet, welche einen gleichzeitigen Zugriff verhindert und somit Determinismus gewährleisten kann. Das Vorschalten des Proxy-Cores zum Entgegennehmen von für von einem Applikations-Core stammende Zugriffe, sowie die Tatsache, dass genau ein Proxy-Core mit der Hardware-Ressource in exklusiver Verbindung steht, führt zu einem Überwinden oder Abmildern der Probleme aus dem Stand der Technik.

Darüber hinaus kann vorgesehen sein, dass der Speicher in dedizierte Bereiche unterteilt wird, die entweder von dem Proxy-Core oder dem Applikations-Core genutzt werden. Somit kann es nicht dazu kommen, dass Proxy-Core und Applikations-Core lesend und/oder schreibend auf denselben Speicherbereich zugreifen.

Nach einer optionalen Modifikation der vorliegenden Erfindung kann vorgesehen sein, dass der Mehrkernprozessor ein heterogener Mehrkernprozessor ist, bei welchem insbesondere der Applikations-Core und der Proxy-Core zueinander heterogene Prozessorkerne bilden.

Anders als bei einem homogenen Mehrkernprozessor, bei dem alle Kerne identisch in Bezug auf Architektur, Leistung und Funktionalität sind, besteht ein heterogener Mehrkernprozessor aus Kernen, die sich in ihrer Architektur, Leistungsfähigkeit oder Funktionalität unterscheiden. Die Kerne können unterschiedliche Instruktionssätze unterstützen, variierende Taktfrequenzen haben oder für spezielle Aufgaben optimiert sein. Heterogene Prozessoren kombinieren oft Hochleistungskerne mit energieeffizienten Kernen oder spezialisierten Kerne für bestimmte Berechnungen wie Grafikverarbeitung oder künstliche Intelligenz.

Nach einer weiteren vorteilhaften Fortbildung der vorliegenden Erfindung kann vorgesehen sein, dass die aus Sicht der Hardwarearchitektur gemeinsam nutzbare Ressource nur von einem einzigen Prozessorkern, entweder dem Applikations-Core oder dem Proxy-Core, genutzt wird, wenn ein konkurrierender Zugriff durch mehr als einen Prozessorkern ein deterministisches Verhalten nicht garantiert oder dieses nicht nachweisbar ist.

Nach einer optionalen Fortbildung der vorliegenden Erfindung kann weiter vorgesehen sein, dass der mindestens eine Applikations-Core und der mindestens eine Proxy-Core bestimmte Funktionen ausüben und Aufgaben ausführen, damit eine Zuordnung der aus Sicht der Hardwarearchitektur gemeinsam nutzbaren Ressource so erfolgt, dass jedem Prozessorkern eine deterministische Verwendung oder eine exklusive Verwendung der zugeordneten Ressource möglich ist. Dies gilt auch für den Fall, wenn gleichzeitige Zugriffe an eine Ressource adressiert sind, da diese durch den exklusiven Zugriff der Ressource des vorgeschalteten Proxy-Cores zeitlich entkoppelbar sind.

Weiter kann nach einer vorteilhaften Fortbildung der vorliegenden Erfindung vorgesehen sein, dass Zugriffsrechte von Prozessorkernen für die aus Sicht der Hardwarearchitektur gemeinsam nutzbaren Ressource -oder sogar weitere Prozessorkerne des Mehrkernprozessor selbst- deaktiviert, insbesondere statisch deaktiviert sind, insbesondere wenn eine über mehrere Prozessorkerne hinweg gemeinsam nutzbare Ressource nicht deterministisch verwendbar ist und nicht exklusiv einem Prozessorkern zuordenbar ist.

Die Hardwareressourcen eines Mehrkernprozessors werden also dahingehend untersucht, ob aus Hardwaresicht ein Zugriff von mehreren Prozessorkernen auf eine jeweilige Hardwareressource möglich ist. Ist dies der Fall, so gilt es das gleichzeitige Zugreifen mehrerer Prozessorkerne auf diese Hardware Ressourcen zu unterbinden, indem die Zugriffsrechte so beschnitten werden, dass lediglich genau ein Prozessorkern auf die jeweilige Hardware Ressourcen zugreifen kann. Dabei ist auch der Fall umfasst, dass ganze Prozessorkerne des Mehrkernprozessors deaktiviert werden, um sicherzustellen, dass immer nur ein Prozessorkern exklusiv Zugriff auf eine Hardware-Ressource besitzt, auf die eigentlich aus Hardwaresicht des Mehrkernprozessors von mehreren Prozessorkernen aus zugegriffen werden kann. Derjenige Prozessorkern, welcher dann noch exklusiven Zugriff auf diese Hardware-Ressource besitzt, und den Zugriff auf diese Ressource für andere Prozessorkerne regelt, bzw. sich hier zwischenschaltet, wird Proxy-Core genannt.

Unter Umständen kann es dabei erforderlich sein, dass Zugriffsrechte von Prozessorkernen für eine Ressource oder sogar Prozessorkerne selbst deaktiviert werden müssen, wenn eine gemeinsam genutzte Ressource für den notwendigen Verwendungsbereich nicht deterministisch verwendet werden kann und nicht exklusiv an einem Prozessorkern zugeordnet werden kann.

Nach einer weiteren optionalen Modifikation der vorliegenden Erfindung kann vorgesehen sein, dass ein Prozessorkern, dem eine Ressource exklusiv zugewiesen ist, einem anderen oder sämtlichen anderen Prozessorkernen indirekten Zugriff auf die exklusiv zugewiesene Ressource zur Verfügung stellt und dabei einen deterministischen Zugriff auf diese Ressource gewährleistet. In der Regel wird ein solcher Prozessorkern als Proxy-Core bezeichnet, befindet sich also in der Kommunikationslinie zwischen einem Applikations-Core und der durch den Applikations-Core angefragten Hardware-Ressource, bspw. einem I/O-Port, auf die exklusiv nur der Proxy-Core zugreifen kann. Gehen nun an die Hardware-Ressource adressierte Daten bei dem zwischengeschalteten Proxy-Core ein, kann dieser etwaige auftretende konkurrierende Zugriffe auf die Hardware-Ressource auflösen und verhindert so ein nicht-deterministisches Verhalten.

Nach einer weiteren vorteilhaften Modifikation der vorliegenden Erfindung kann vorgesehen sein, dass die Ein-/Ausgabeschnittstelle alle Arten von Binärsignalen, alle Arten von statischen oder dynamischen Signalen aus Analog/Digital- und Digital/Analog-Wandlern, alle Arten von Signalen aus allen Arten von Kommunikationskontrollern, die ein bestimmtes Protokoll erfordern oder nicht, und/oder alle Arten von Signalen aus Speichereinrichtungen, die eine asynchrone Verwaltung erfordern, umfasst, und/oder die interne Hardware-Komponente passive Komponenten, wie Slaves, oder aktive Komponenten, wie Busmaster, sind, vorzugsweise wobei die Slaves Register von Prozessorfeatures, wie Timer/Counter, oder Konfigurationsregister, oder Arbeitsspeicher für Programminstruktionen und Programmdaten sind, und/oder die Busmaster sogenannte Engines sind, die einen Prozessorkern von intensiven Aktivitäten wie Datentransfer, komplexe Berechnungen, Propagierung von Prozessorereignissen (DMAs, Checksum-Engines, Controllers) entlasten.

Nach einer weiteren optionalen Fortbildung der vorliegenden Erfindung kann vorgesehen sein, dass mindestens ein Proxy-Core vorgesehen ist, der die Rolle eines Servers übernimmt und dazu ausgelegt ist, die Plattform-Software auszuführen, vorzugsweise ausschließlich auszuführen, die den direkten Zugriff auf nun nicht gemeinsam nutzbare Ressourcen übernimmt und die Synchronisierung der Zugriffe auf diese für mindestens eine Applikation-Core realisiert. In einer typischen Anwendung ist die Plattform-Software sowohl auf allen Proxy-Cores als auch auf mehreren Applikation-Cores verteilt, wobei alle Teile der Plattform-Software zusammenarbeiten, um die Merkmale Sicherheit und Determinismus zu gewährleisten.

Der Teil der Plattform-Software auf mindestens einem der roxy-Cores dient dazu, den exklusiven Zugriff des Proxy-Cores auf die durch den Proxy-Core verwaltete Hardware-Ressource umzusetzen. Hierfür wird auf dem Proxy-Core der Teil der Plattform-Software betrieben, die ausschließlich zum Zweck hat, die exklusiv durch den Proxy-Core verwaltete Hardware-Ressource anderen Prozessorkernen zugänglich zu machen und dabei eine deterministische Funktion und/oder ein deterministisches Verhalten zu gewährleisten.

Nach einer weiteren optionalen Modifikation der vorliegenden Erfindung kann vorgesehen sein, dass mindestens ein Applikations-Core vorgesehen ist, der dazu ausgelegt ist, mindestens eine Software-Applikation auszuführen, die nur indirekt mit den nun nicht gemeinsam nutzbaren Ressourcen kommuniziert, indem Daten über den Proxy-Core an die gewünschte Ressource gesendet bzw. hierüber empfangen werden, vorzugsweise wobei hierzu die Funktionen der Plattform-Software des Proxy-Cores Verwendung finden.

Die mindestens eine Software-Applikation kann ein beliebiges Programm darstellen, welches Daten über den Proxy-Core an die (exklusiv durch den Proxy-Core verwaltete) Ressource sendet oder von dieser empfängt.

Nach einer weiteren Fortbildung der vorliegenden Erfindung kann vorgesehen sein, dass die Plattform-Software einen softwarebasierten Mechanismus zur deterministischen Kommunikation zwischen dem mindestens einen Applikations-Core, insbesondere einer Software-Applikation hierauf, und dem mindestens einem Proxy-Core, insbesondere einer Plattform-Software hierauf, vorsieht, vorzugsweise wobei der Mechanismus auf einer dedizierten Speicher-Komponente basiert, die über ausreichend Bandbreite und mehrere Schnittstellen verfügt, um konkurrierende Zugriffe von mehreren Prozessorkernen deterministisch zu verarbeiten.

Nach einer weiteren optionalen Fortbildung der vorliegenden Erfindung kann vorgesehen sein, dass mindestens ein Proxy-Core vorgesehen ist, der dazu ausgelegt ist, an nicht gemeinsam nutzbare Hardware-Ressourcen adressierte Daten von anderen Prozessorkernen, insbesondere eines anderen Applikations-Cores, entgegenzunehmen und diese direkt oder indirekt über einen Zwischenspeicher an die adressierte Ressource zu übertragen, vorzugsweise wobei der Proxy-Core die an die Ressource adressierten Daten anderer Prozessorkerne synchronisiert und/oder zeitlich entkoppelt, um Interferenzen oder ein nicht deterministisches Verhalten zu verhindern.

Tritt nun also der Fall auf, dass mehrere Applikations-Cores gleichzeitig auf eine von dem Proxy-Core verwaltete Hardware-Ressource zugreifen möchten, kommt es nicht zu einem konkurrierenden Zugriff, der das deterministische Verhalten gefährdet. Vielmehr wird der Proxy-Core mit der auf dem Proxy-Core laufenden Plattform-Software die beiden Anfragen zeitlich entkoppeln und so an die von dem Proxy-Core verwaltete Hardwareressource zuleiten, dass ein deterministisches Verhalten gewährleistet ist. Bspw. wird zunächst ein erster Zugriff eines der mehreren Applikations-Cores an die Hardware-Ressource gesendet und verarbeitet, bevor der zweite Zugriff an die Hardware-Ressource weitergegeben wird. Dadurch kommt es nicht zu einem gleichzeitigen, konkurrierenden Zugriff auf die Hardware-Ressource.

Nach einer optionalen Fortbildung der vorliegenden Erfindung kann vorgesehen sein, dass der Mehrkernprozessor dazu ausgelegt ist, dass eine Kommunikation mit einer nicht gemeinsam nutzbaren Hardware-Ressource (in Bezug auf die Determinismus-Anforderungen) ausschließlich über einen der Ressource zugeordneten Proxy-Core erfolgt.

Das exklusive Zuordnen von Hardware-Ressourcen an einen diese verwaltenden Proxy-Core wird natürlich nur für diejenigen Ressourcen durchgeführt, die einen gleichzeitigen Zugriff mehrerer Applikations-Cores nicht auf deterministischen Art und Weise verarbeiten können. Werden solche Hardware-Ressourcen identifiziert, wird ihnen exklusiv ein Proxy-Core zugeordnet, der sich um die Problematik eines gleichzeitigen, konkurrierenden Zugriffs auf ebenjene Ressource kümmert und ein deterministisches Verhalten dieser Ressource garantiert.

Nach einer Fortbildung der vorliegenden Erfindung kann ferner vorgesehen sein, dass der Mehrkernprozessor dazu konfiguriert ist, zum Ausführen der auf dem Proxy-Core und/oder dem Applikations-Core ausgeführten Plattform-Software dem Prozessorkern statisch die hierzu notwendigen Hardware-Ressourcen, wie Programm- und Arbeitsspeicher, Timer, Konfigurationskomponenten, Diagnostikkomponenten, und/oder I/O-Ports, exklusiv zuzuweisen, um eine interferenzfreie Ausführung der auf dem Prozessorkern ausgeführten Plattform-Software zu gewährleisten.

Durch das statische Zuweisen der zum Ausführen der Plattform-Software erforderlichen Komponenten an den mindestens einen Proxy-Core bzw. den mindestens einen Applikations-Core, wird sichergestellt, dass es zu einem interferenzfreien Ablauf der Plattform-Software (sowohl auf dem mindestens einen Proxy-Core wie auch dem mindestens einen Applikations-Core) kommt. Schließlich stehen diese Komponenten ausschließlich dem jeweiligen Prozessorkern zu, damit dieser die Plattform-Software fehlerfrei ausführen kann.

Dem Fachmann ist klar, dass abhängig von der Komplexität ein, zwei oder mehr Proxy-Cores involviert werden können. Die vorgeschlagene Architektur ist konfigurierbar und erweiterbar, und wird an den jeweils vorherschenden Bedürfnissen angepasst. Diese Bedürfnisse können insbesondere, aber nicht ausschließlich, in Bezug auf die Anzahl und Art der verwendeten Schnittstellen unter den von der Steuerungskomponente physisch zur Verfügung gestellten Schnittstellen, die Typen der ausgetauschten Signale, die Latenzanforderungen oder die Leistungsanforderungen der Anwendung variieren.

Die Erfindung betrifft zudem ein Verfahren zum Betreiben eines Mehrkernprozessors nach einem der vorhergehend diskutierten Aspekte in einem Luftfahrzeug, vorzugsweise wobei der mindestens eine Applikations-Core und der mindestens eine Proxy-Core jeweils mit einer Plattform-Software versehen sind, die sicherstellt, dass mindestens eine eigentlich von mehr als zwei Prozessorkernen, bzw. Prozessorkerntypen aus zugreifbare Ressource nur von genau einem Proxy-Core aus zugreifbar ist, wobei die konkurrierende Zugriffe auflösende Plattform-Software vorgesehen ist, wenn bei einem konkurrierenden Zugreifen durch die Prozessorkerne ein deterministisches Verhalten der adressierten Ressource nicht hardwareseitig garantiert oder offensichtlich ist.

Weitere Merkmale, Einzelheiten und Vorteile der Erfindung werden anhand der nachfolgenden Figurenbeschreibung ersichtlich. Dabei zeigen:
- Fig. 1:: eine schematische Ansicht eines erfindungsgemäßen Mehrkernprozessors, bei dem ein erster Proxy-Core mit dem ihm zugewiesenen Hardware-Ressourcen grafisch hervorgehoben ist,
- Fig. 2:: eine schematische Ansicht eines erfindungsgemäßen Mehrkernprozessors, bei dem ein zweiter Proxy-Core mit dem ihm zugewiesenen Hardware-Ressourcen grafisch hervorgehoben ist,
- Fig. 3: eine schematische Ansicht eines erfindungsgemäßen Mehrkernprozessors, bei dem ein erster Applikations-Core mit dem ihm zugewiesenen Hardware-Ressourcen grafisch hervorgehoben ist,
- Fig. 4: eine schematische Ansicht eines erfindungsgemäßen Mehrkernprozessors, bei dem ein zweiter Applikations-Core mit dem ihm zugewiesenen Hardware-Ressourcen grafisch hervorgehoben ist,
- Fig. 5: eine Darstellung für den Datenausgangsfluss aus der Sicht eines Applikations-Cores, und
- Fig. 6: eine Darstellung für den Dateneingangsfluss aus der Sicht eines Applikations-Cores.

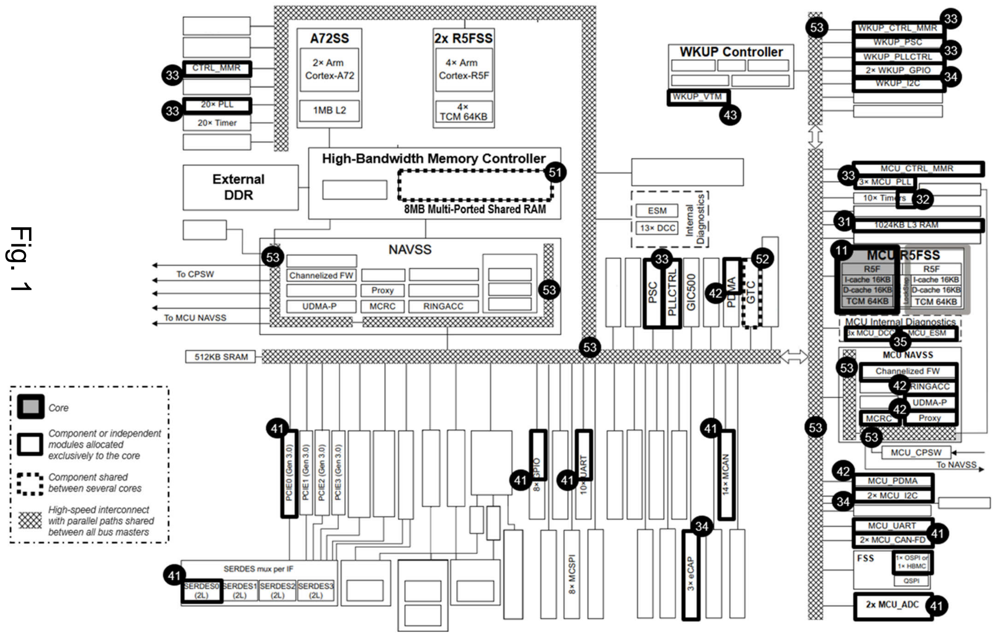

Fig. 1 zeigt eine schematische Darstellung eines Mehrkernprozessors von Texas Instruments, nämlich den Typ Jacinto-7 (J7), anhand dem die vorliegende Erfindung über die Figuren 1-4 hinweg erläutert ist.

Der erste Proxy-Core 11 ist zusammen mit dem ihm exklusiv zugeordneten Hardwarekomponenten 31, 32, 33, 34, 35, die ausschließlich von dem Proxy-Core 11 verwendet werden, und den Hardwarekomponenten 41, 42, 43, auf welche die Applikations-Cores über den ersten Proxy-Core 11 zugreifen, grafisch hervorgehoben.

Die Hardwarekomponenten 51, 52, 53, die konkurrierende Zugriffe innerhalb der Bandbreite deterministisch verwalten können und deswegen von unterschiedlichen Proxy-Cores und Applikations-Cores gemeinsam genutzt werden, sind ebenfalls grafisch hervorgehoben.

Der dargestellte erste Proxy-Core 11 führt ausschließlich die Plattform-Software aus, aber mit unterschiedlichen, spezifisch zugeordneten Aufgaben. In Fig. 1 ist das erste Proxy-Core 11 auf einem Core des MCU_R5FSS Dual-Core Clusters allokiert, wobei in der vorliegend dargestellten Umsetzung seine Aufgaben hauptsächlich die Verwaltung von digitalen und analogen I/Os betreffen. Der zweite Core neben dem Proxy-Core 11 wird entsprechend dem Prozessormechanismus deaktiviert.

Zum Ausführen der Plattform-Software auf dem Proxy-Core 11 verwendet der Proxy-Core 11 einen Programm- und Arbeitsspeicher 31, einen Timer und Interrupt-Controller 32, Konfigurationskomponenten 33, Peripheriekomponenten 34, als I/O-Schnittstellen zu externen Geräten, sowie eine Engine 35 für die Diagnostik und zum Überwachen von Tätigkeiten. Die vorstehenden Komponenten sind dabei dem Proxy-Core 11 exklusiv zugeordnet, sodass nur der Proxy-Core 11 zur Ausführung der auf dem Proxy-Core betriebenen Plattform-Software auf diese Komponenten zugreifen kann. Diese Komponenten können auch exklusive Komponenten genannt werden und sind erforderlich zum Ausführen der Plattform-Software.

Darüber hinaus gibt es Hardwarekomponenten 41, 42, 43, auf die der Proxy-Core 11 ebenfalls exklusiv zugreift, die jedoch für die Applikations-Cores indirekt über dem Proxy-Core 11 zu greifbar sind. Diese Hardwarekomponenten können auch verwaltete Komponenten genannt werden, da der Zugriff exklusiv über dem Proxy-Core 11 verwaltet wird. Andere Prozessorkerne außer der der verwalteten Komponente zugeordnete Proxy-Core haben keinen direkten Zugriff, sondern können mit der Hardware-Ressource nur indirekt über den Proxy Core kommunizieren.

Die durch den Proxy-Core 11 exklusiv verwalteten Komponenten, bei der ein Zugriff für Applikations-Cores mittelbar über das Proxy-Core 11 möglich ist, umfassen bspw. Peripherie-Komponenten 41 als I/O-Schnittstellen zu externen Geräten, eine interne Engine/Co-Prozessor 42, wobei eine Verwendung hauptsächlich für einen Datentransfer vorgesehen ist, sowie Diagnostik-orientierte Komponenten 43 für Monitoring-Tätigkeiten.

Die weiteren Hardwarekomponenten 51, 52, 53 sind dazu in der Lage, konkurrierende Zugriffe innerhalb ihrer Bandbreite deterministisch zu verwalten und können daher von mehreren Proxy-Cores 11 und Applikations-Cores gemeinsam genutzt werden. Diese Komponenten können auch als gemeinsam genutzte Komponenten bezeichnet werden.

Eine gemeinsam genutzte Komponente ist bspw. ein gemeinsam genutzter Speicher 51, wobei dieser hauptsächlich für den Austausch von Daten zwischen de mindestens einen Proxy-Core und dem mindesten einen Applikations-Core verwendet wird. Darüber hinaus gibt es gemeinsam genutzte Synchronisierungskomponenten 52 zum Synchronisieren der verwendeten Cores.

Mit dem Bezugszeichen 53 ist ein Interconnect-Element als konkrete Ausgestaltung eines Bus-Systems dargestellt, welches die Kommunikation zwischen den unterschiedlichen Bestandteilen des Mehrkernprozessors ermöglicht.

Die dienende Rolle eines jeden Proxy-Cores 11 wird durch Komponenten der Plattform-Software 60 realisiert, die von einem jeweiligen Proxy-Core 11 ausgeführt wird.

Dabei kann vorgesehen sein, dass jedem Proxy-Core 11, 12 bereits beim Design statisch die notwendigen nicht gemeinsam nutzbaren Hardwareressourcen, wie Programm- und Arbeitsspeicher 31, Timer 32, aber auch Konfigurationskomponenten 33, Diagnostik Komponenten 35 und spezifische I/O-Ports 34 exklusiv zugewiesen sind. Dies ermöglicht eine interferenzfreie Ausführung der auf dem Core 11, 12 ausgeführten Software.

Hardwarekomponenten 41, 42, 43, die nicht durch mehrere Prozessorkerne gemeinsam deterministisch nutzbar sind aber deren Zugriff von anderen Prozessorkernen erforderlich oder involviert ist, werden einem jeweiligen Proxy-Core 11 statisch per Design zugewiesen.

Jeder Proxy-Core übernimmt für die ihm zugewiesenen von ihm verwalteten Hardwareressourcen den direkten Zugriff, sodass nur dieser Proxy-Core und keine weiteren Cores zugreifen können. Ist ein Zugriff von einem weiteren Core gewünscht, erfolgt dies über das Zwischenschalten des Proxy-Cores, der in direkter Kommunikation zu der angefragten Hardwarekomponente steht.

Darüber hinaus wird jedem Proxy-Core statisch, bspw. per Design oder per Konfigurationsdatei, mindestens ein dedizierter Bereich des gemeinsam genutzten Speichers 51 zugewiesen, die für den Datenaustausch mit den Applikations-Cores verwendet werden.

Auch kann vorgesehen sein, dass die von anderen Prozessorkernen stammenden Daten, welche an eine vom Proxy-Core verwaltete Hardwarekomponente gerichtet ist, in Bezug auf Format und Protokoll komplettiert werden, damit der Datentransfer zwischen Applikations-Core und verwalteter Hardwarekomponente kompatibel ist.

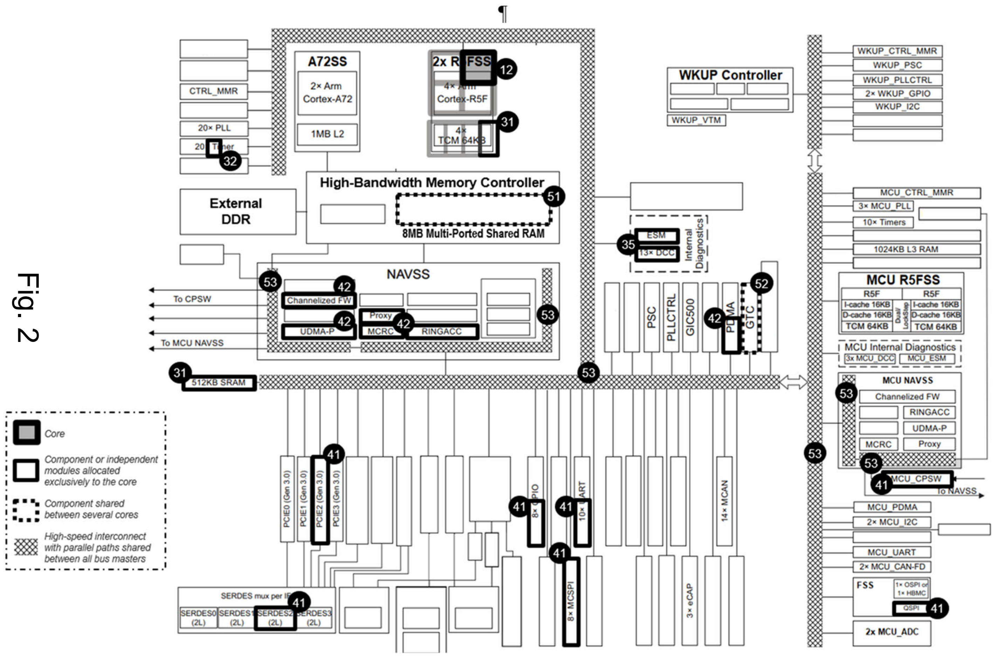

Fig. 2 zeigt einen zweiten Proxy-Core 12 mit den mit ihm in Verbindung stehenden bzw. zugewiesenen Komponenten des Mehrkernprozessors, die im wesentlichen mit den aus Fig. 1 übereinstimmen, aber die andere Komponenten an anderen Positionen in dem Mehrkernprozessor umgesetzt sind.

Dabei ist bspw. zu erkennen, dass der zweite Proxy-Core 12 nun ein Kern einer Vierkernarchitektur ist, wohingegen der erste Proxy-Core 11 ein Kern einer Zweikernarchitektur ist.

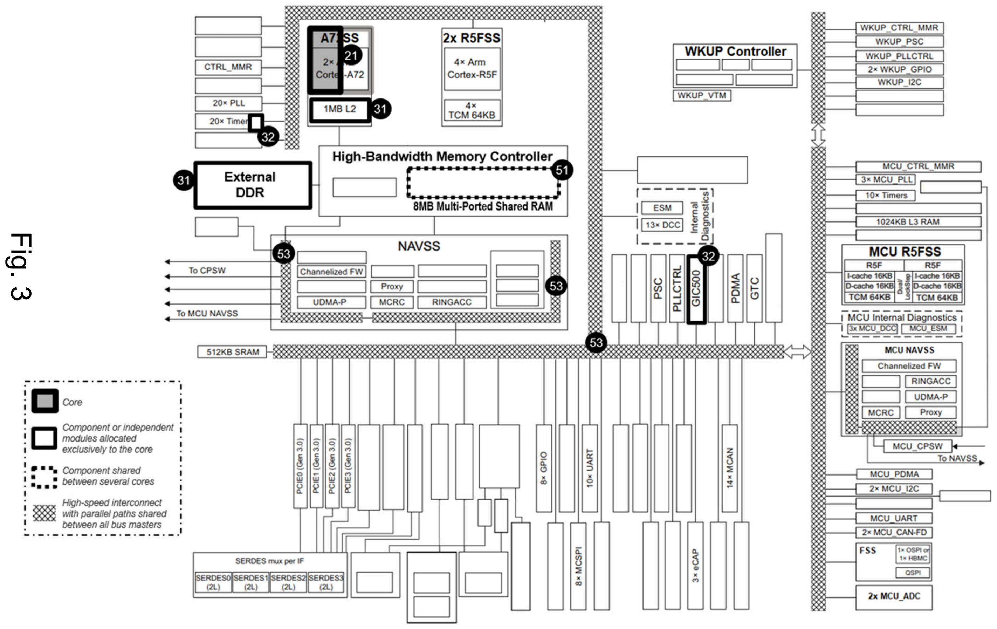

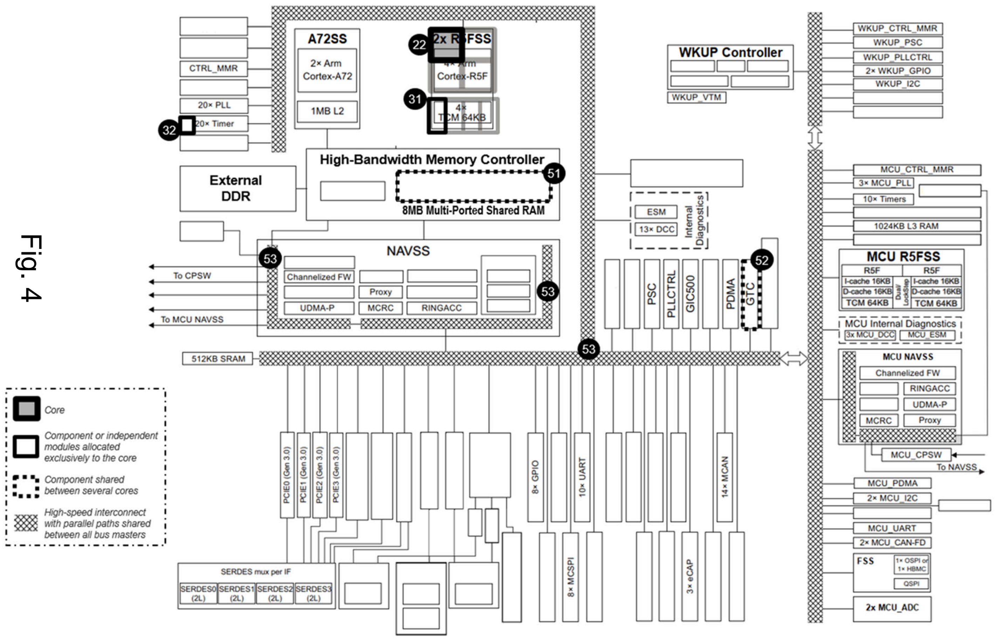

Figs. 3 und 4 zeigen jeweils eine schematische Ansicht eines erfindungsgemäßen Mehrkernprozessors, bei dem ein jeweiliger Applikations-Core mit dem ihm zugewiesenen Hardware-Ressourcen grafisch hervorgehoben ist.

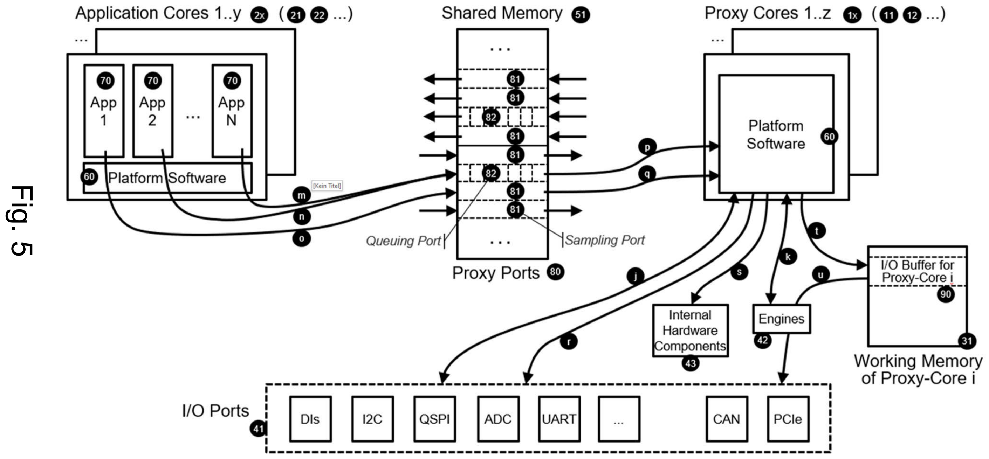

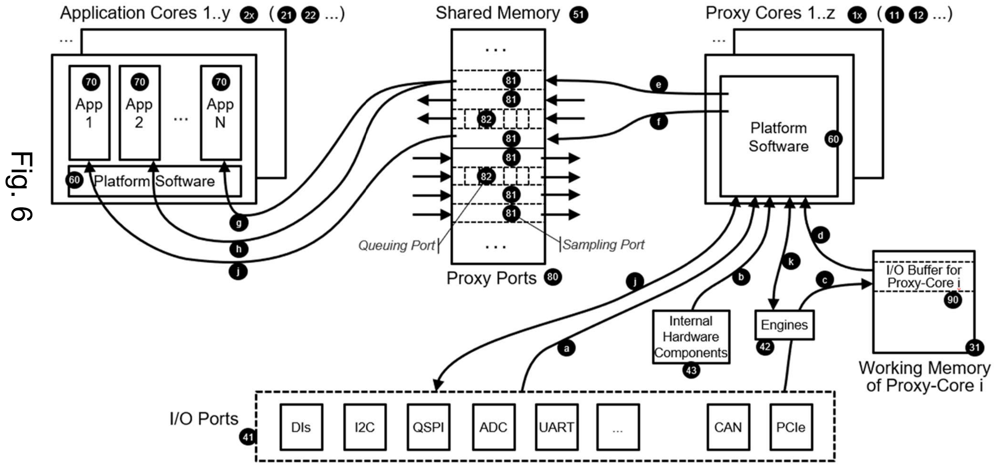

Ein Applikations-Core 21, 22 ist auf die Ausführung einer oder mehrerer Software-Applikationen 70 spezialisiert (dargestellt in Fig. 5 und Fig. 6). Die Software-Applikationen 70 können Benutzerapplikationen oder Plattformdedizierte Wartungsapplikationen sein.

Die Software-Applikationen 70 haben keinen direkten Zugriff auf den Prozessor, Eingang- und Ausgangschnittstellen (I/O-Ports), wie auch keinen direkten Zugriff auf die internen Prozessor-Hardware-Ressourcen 41, 42, 43, die ein spezifisches Zugriffprotokoll wegen Determinismus benötigen. Direkte Zugriffe werden durch die auf die Proxy-Cores ausgeführte Plattform-Software, PSW 60, als Dienstleistung für die Applikations-Cores 21, 22 durchgeführt.

Im vorliegenden Beispiel wird die Plattformarchitektur mit zwei Applikations-Cores 21, 22 und die Plattform-Software 60 implementiert. Abhängig von der Komplexität des Endprodukts, können ein, zwei oder mehr Applikations-Cores 21, 22 involviert werden. Die Plattformarchitektur ist konfigurierbar und erweiterbar, und wird an den Bedürfnissen des Endprodukts in diesem Sinn angepasst, sodass dem Fachmann klar ist, dass die Anzahl der Applikations-Cores genau wie die Anzahl der Proxy-Cores nicht auf eine bestimmte Menge beschränkt ist.

Applikations-Cores 21, 22 führen spezifische Komponenten der PSW 60 aus, um die Kommunikation mit den Proxy-Cores 11, 12 zu ermöglichen.

Jedem Applikations-Core 21, 22 werden statisch per Design die notwendigen nur durch einen jeweiligen Applikations-Core 21, 22 zu nutzenden Hardware-Ressourcen wie Programm- und Arbeitsspeicher 31, und Timer 32 exklusiv zugewiesen. Dies ermöglicht eine interferenzfreie Ausführung der auf dem Core 21, 22 ausgeführten Software.

Außerdem werden jedem Applikations-Core 21, 22 statisch per Design oder per Konfigurationsdateien dedizierte Bereiche des gemeinsam genutzten Speichers 51 zugewiesen, die für den Datenaustausch mit den Proxy-Cores 11, 12 verwendet werden.

Dabei ist vorgesehen, dass ein Applikations-Core 21, 22 ausschließlich die ihm zugewiesenen Hardware-Ressourcen verwendet.

Anhand der Darstellungen in den Figs. 5 und 6 wird die Umsetzung der deterministischen Client-Server-Kommunikation zwischen den Applikations-Cores 21, 22 und den Proxy-Cores 11, 12 dargestellt.

Diese Art der Kommunikation ermöglicht die Zugriffe der Applikations-Cores 21, 22 zu den I/O-Ports 41 und gemeinsam genutzten internen Hardware-Komponenten 42, 43 indirekt durch die Proxy-Cores 11, 12 zu gewährleisten, sodass es hier nicht zu konkurrierenden Zugriffen kommt, welche den angestrebten Determinismus verhindern.

Die Prinzipien der Plattformarchitektur für die nach der Erfindung umgesetzte Client-Server Kommunikation sind in den Abbildungen Fig. 5 (für den Datenausgangsfluss) und in Fig. 6 (für den Dateneingangsfluss) dargestellt.

Dabei implementieren dedizierte Software-Komponenten der PSW 60, die für mehrere miteinander ressource-konkurrierenden Busmaster konzipiert werden, die deterministische Übertragung von Nachrichten zwischen ressource-konkurrierenden Clients (beispielsweise zwei verschiedene Applikations-Cores 21, 22) und Servern, also den Proxy-Cores 11, 12. Dies erfolgt mithilfe von Kommunikationskanälen, die als Proxy-Ports bezeichnet werden. Diese basieren auf der kombinierten Verwendung von mindestens einem der nachfolgenden Merkmale:
∘ Einer Implementierung eines Sampling- und Queuing-Ports Konzepts, vorzugsweise unterstützt von einer Implementierung der Doppelpuffer-Technik und einer dedizierten Verwaltung der Queue-Indizes, um die Echtzeitreaktion und die Integrität der Nachrichten bei gleichzeitigen Lese-/Schreiboperationen aus mehreren Cores zu gewährleisten.
∘ Einem spezifischem Mapping der Proxy-Ports auf der leistungsfähigsten internen Speicherkomponente des Prozessors. Dieses Mapping nützt die hohe Datenübertragungsbandbreite und die multiplen physikalischen Schnittstellen der Speicherkomponente. Dank diesen Eigenschaften können konkurrierende Zugriffe auf die Proxy-Ports in Echtzeit durchgeführt werden, wenn diese Zugriffe innerhalb der Bandbreite der Prozessorinfrastruktur beschränkt sind.
∘ Einem budget-basierten Mechanismus zur konfigurierbaren Begrenzung der Nutzung der Proxy-Ports seitens der Applikations-Cores, um das Risiko einer Sättigung der verfügbaren Bandbreite der Prozessorinfrastruktur zwischen den Cores und dem Speicher zu vermeiden.

Die Datenübertragung aus Software-Applikationen 70 an Output-Ports 41 oder internen Hardware-Komponenten 43 (siehe Fig. 5) wird, wie nachfolgend stichpunktartig aufgeführt, wie folgt realisiert:
∘ Die Software-Applikationen 70 übertragen Applikationssignale aus unterschiedlichen Applikationen über eine jeweilige virtuelle oder tatsächliche Datenleitung m, n, o zu den entsprechenden Proxy-Ports 80 durch die Ausführung von Softwarekomponenten der Applikations-Cores 21, 22 und der darauf laufenden Plattform-Software 60.
∘ Jeder Sampling- 81 und/oder Queuing-Port 82 wird periodisch und sequenziell durch die Proxy-Cores 11, 12 in Verbindung mit der darauf laufenden Plattform-Software 60 über entsprechende Datenleitungen p, q eingelesen und verarbeitet. Jede in einem Proxy-Port 80 enthaltene Angabe wird erst dann direkt oder indirekt an das entsprechende Output-Port 41 oder an die interne Hardware-Ressource 43 übertragen, sofern diese Komponente bereit ist (z.B. wenn die vorherige Übertragung von derselben Komponente abgeschlossen ist).
∘ Je nach Art der Output-Ports 41 wird die Übertragung der zu sendenden Daten von den Proxy-Cores 11, 12 direkt (Leitung j, r) zu den Output-Ports 41, oder indirekt (Leitung t, u) über Output-Buffer 90 und interne Datentransfer-Engines 42 erfolgen. Jeder Output-Buffer 90 liegt in dem Arbeitsspeicher 31 des Proxy-Cores 11, 12, das die zugewiesenen Datentransfer-Engines 42 steuert.
∘ Nach Bedarf werden die internen Datentransfer-Engines 42 die zwischengelagerten, zu sendenden Daten aus einem I/O-Buffer 90 im Arbeitsspeicher 31 des entsprechenden Proxy-Cores lesen und an den Output-Port 41 senden. Jede interne Datentransfer-Engine 42 kann dabei exklusiv von einem einzelnen Proxy-Core 11, 12 gesteuert werden (via Leitung k).
∘ Je nach Art des Applikationssignals können für dasselbe Signal mehrere Typen von I/O-Ports 41 benötigt werden, unter anderem um bestimmte Protokolle mit externen Vorrichtungen zu gewährleisten. Die Proxy-Core Plattform-Software 60 übernimmt die Steuerung der benötigten I/O-Ports, um das entsprechende Kommunikationsprotokoll durchzuführen (bspw. über Leitung j).
∘ Die Signale aus der Software-Applikation 70 werden von der Plattform-Software 60 des Proxy-Cores 11, 12 als Daten so aufbereitet und übertragen, dass diese mit dem Format und den Protokollen der betreffenden Output-Ports 41 und etwaigen davon abhängigen externen Geräten oder Hardware-Komponenten kompatibel sind.

Die Datenübertragung von Input-Ports 41 oder internen Hardware-Komponenten 43 zu einer oder mehreren Software-Applikationen 70 (vgl. Fig. 6) wird, wie nachfolgend stichpunktartig aufgeführt, wie folgt realisiert:
∘ Die von den Input-Ports 41 und/oder internen Hardware-Komponenten 43 zur Verfügung gestellten Daten werden den auf den Applikations-Cores 21, 22 laufenden Software-Applikationen 70 zugestellt, indem diese von der Plattform-Software 60, die auf einem jeweiligen Proxy-Core 11, 12 läuft, an die entsprechenden Proxy-Ports 80 überführt werden (vgl. Leitung e, f).
∘ Die von den Input-Ports 41 oder internen Hardware-Komponenten 43 stammenden Daten werden direkt (über die Datenleitung a, b) und/oder indirekt (über die Datenleitung c, d) von der auf einem jeweiligen Proxy-Core 11, 12 ausgeführten Plattform-Software 60 eingelesen. Die Daten können dann auch so in ihrem Format und ihrer Synchronisierung aufbereitet werden, dass die aufbereiteten Signale nach einem Weiterleiten von einer jeweiligen Software-Applikation 70 eines Applikations-Cores 21, 22 direkt verwertet werden können.
∘ Je nach Art der Input-Ports 41 kann die Übertragung der zur Verfügung gestellten Daten von den Proxy-Cores 11, 12 entweder direkt aus den Input-Ports 41, oder indirekt (Leitung c, d) durch einen Input-Buffer 90 und/oder eine interne Datentransfer-Engine 42 erfolgen. Jedes Input-Buffer 90 kann dabei im Arbeitsspeicher 31 des Proxy-Cores 11, 12 liegen, der die mindestens eine zugewiesene Datentransfer-Engine 42 exklusiv steuert.
∘ Der Zugriff der Software-Applikationen 70 auf die Proxy-Ports 80 kann entsprechend der Konfiguration ihrer Zugriffsrechte erfolgen.
∘ Je nach Art der Applikationssignale können für dasselbe Signal mehrere Typen von I/O-Ports 41 benötigt werden, unter anderem um bestimmte Protokolle mit externen Devices zu gewährleisten. Die Plattform-Software 60 eines Proxy-Cores 11, 12 übernimmt die Steuerung der benötigten I/O-Ports, um das entsprechende Kommunikationsprotokoll durchzuführen (bspw. via Leitung j).

Die Erfindung bietet somit dabei die Möglichkeit, Multicore-Prozessoren nach DO178C und AMC20-193 zu zertifizieren. Dies gelingt, da es mit der vorliegenden Erfindung möglich ist, die WCET (Worst-Case Execution Time) jeder der verschiedenen Softwareanwendungen zu berechnen, die auf verschiedenen Cores des Prozessors ausgeführt werden. Dies ist durch die (potenziell multiple) Zentralisierung der gemeinsamen Nutzung von Ressourcen leichter zu berechnen. Im Vergleich zu Lösungen, bei denen der Zugriff auf Ressourcen nicht koordiniert zwischen allen Verbrauchern der gemeinsam genutzten Ressourcen abgestimmt wird, ermöglicht die vorliegende Erfindung eine sehr viel zuverlässigere Berechnung.

Weiter ist es mit der vorliegenden Erfindung möglich, die Robust-Partitioning-Eigenschaft der Plattform zu demonstrieren, was eine inkrementale Zertifizierung bei der mehrstufigen Integration von neuen Partitionen, entsprechend neuen Anforderungen eines Produktes, ermöglicht.

Auch kann eine Demonstration von Data-Coupling zwischen Partitionen sehr viel leichter vorgenommen werden, wobei die Partitionen Daten austauschen, aber nicht im selben Binärcode verlinkt sind und auf verschiedenen Cores des Multicore-Prozessors ausgeführt werden.

Zudem ermöglicht es die vorliegende Erfindung auch, entweder auf ein RTOS (= Echtzeitbetriebssystem) zu verzichten oder eine größere Auswahl für ein RTOS zu haben, weil dieser nicht zwingend eine integrierte Unterstützung für Multicore-Prozessoren benötigt, da die Kontrolle über potenzielle Interferenzen von der Plattform übernommen wird (erweiterter AMP-Modus).

Zu guter Letzt ermöglicht die Erfindung auch eine optimierte Nutzung der Applikations-Cores im Vergleich zu Single- oder Multiprozessor-Lösungen, und zu Multicore Lösungen wie "reinen" AMP, SMP, und mit Hypervisor. Dies deswegen, da eine Arbeitsteilung zwischen Proxy-Cores (I/Os) und Applikations-Cores stattfindet, wodurch mehr (durchgehende) Prozessorzeit für die Ausführung der eigentlichen Anwendung zur Verfügung steht. Bei Single- oder Multiprozessorsystem muss dagegen jeder Prozessor seine eigenen I/Os verarbeiten, was auch mehr Overhead erzeugt als eine gebündelte I/O-Verarbeitung auf einzelnen Cores.

Die in den Figuren 1 bis 4 dargestellte Umsetzung der Erfindung besteht aus der erfindungsgemäßen Plattformarchitektur für eingebettete Systeme, die auf Multicore-Prozessoren vom Typ Texas Instrument Jacinto-7 (DRA829, TDA4VM und similären Derivaten) basiert. Dem Fachmann ist aber klar, dass die zugrunde liegende Idee der vorliegenden Erfindung selbstverständlich auch für andere Mehrkern-Prozessoren Verwendung finden kann. Nach der Erfindung werden spezifische Struktur- und Schnittstellenaspekte kombiniert, um eine funktionale und zeitliche deterministische Ausführung von Software-Partitionen für sicherheitskritische (Avionik-) Systeme zu ermöglichen. Diese Lösung erfordert kein Real-Time Operating System (RTOS) mit spezieller Unterstützung für Multicore-Prozessoren.

Zusätzlich basiert diese Architektur auf einem spezifischen Satz von Konzepten zur effizienten Zuteilung von Hardware-Ressourcen für bestimmte Prozessortypen (strukturelle Aspekte) und einem deterministischen Kommunikationsmechanismus zwischen den Software-Applikationen, die auf verschiedenen Cores des Multicore-Prozessors ausgeführt werden (Schnittstellenaspekte).

Die einzelnen oder kombinierten vorstehend beschriebenen Maßnahmen ermöglichen es, eigentlich nicht durch mehrere Prozessorkerne gemeinsam nutzbare Ressourcen zu isolieren und sie auf kontrollierte und vorhersehbare Weise gemeinsam zu nutzen, wenn der Bedarf besteht. Zusammen erlauben diese beiden Maßnahmen die Beseitigung von nicht quantifizierbaren Interferenzen beim konkurrierenden Zugriff mehrerer Prozessorkerne auf gemeinsamen Ressourcen.

Die Erfindung ermöglicht eine zentralisierte Verwaltung der gemeinsam genutzten Ressourcen ohne Gefahr zu laufen, eine nicht-deterministische Reaktion zu provozieren. Sie ermöglicht auch die Koexistenz mehrerer unabhängiger Einheiten zur zentralisierten Verwaltung von Ressourcen, wenn dies erforderlich ist. Folglich ist die Modularität nur durch die Anzahl der Cores und die Bandbreite der Kommunikationsinfrastruktur des Multicore-Prozessors begrenzt.

### Bezugszeichenliste:

- 1x: Proxy-Cores
- 11: erster Proxy-Core
- 12: zweiter Proxy-Core

- 2x: Applikations-Cores
- 21: erster Applikations-Core
- 22: zweiter Applikations-Core

- 3x: exklusiv einem Core zugeordnete Hardware-Komponenten, die nur von diesem Core verwendet werden
- 31: Programm- und Arbeitsspeicher
- 32: Timer und Interrupt-Controller
- 33: Konfigurationskomponenten
- 34: Peripherie-Komponenten als I/O Schnittstellen zu externen Komponenten oder Geräte
- 35: Diagnostik-orientierte Engine/Controller Komponenten für Monitoring-Tätigkeiten

- 4x: exklusiv einem Proxy-Core zugeordnete Hardware-Komponenten, auf die Applikations-Cores indirekt über den Proxy-Core zugreifen
- 41: Peripherie-Komponenten als I/O Schnittstellen zu externen Komponenten oder Geräten
- 42: Interne Engine/Co-Prozessor Hardware-Komponenten, hauptsächlich für Datentransfer verwendet
- 43: Diagnostik-orientierte Komponenten für Monitoring Tätigkeiten

- 5x: Infrastruktur-bedingte Hardware-Komponenten, die konkurrierende Zugriffe innerhalb ihrer Bandbreite deterministisch verwalten können, und die von mehreren Proxy- und/oder Applikations-Cores gemeinsam genützt werden
- 51: gemeinsam genutzter Speicher, hauptsächlich für den Austausch von Daten zwischen den Proxy-Cores und den Applikations-Cores verwendet
- 52: gemeinsam genutzte Komponente, die für die Synchronisierung der benutzen Cores notwendig sind
- 53: Interconnect (Bus-System) Elementen, die die Kommunikation zwischen alle Master-Komponenten mit allen Slave-Komponenten ermöglichen
- 60: Plattform-Software, PSW
- 70: Software-Applikation

## Patentansprüche

1. Mehrkernprozessor, insbesondere zum Betreiben einer Steuerkomponente eines Luftfahrzeugs, umfassend:
mindestens einen ersten Prozessorkern zum Ausführen von Rechenoperationen, auch benannt als Applikations-Core, und
mindestens einen zweiten Prozessorkern zum Ausführen von Rechenoperationen, auch benannt als Proxy-Core, wobei
der mindestens eine Applikations-Core und der mindestens eine Proxy-Core aus Sicht der Hardwarearchitektur beide eine Zugriffsmöglichkeit auf Prozessor- und/oder Hardwareressourcen besitzen, insbesondere mindestens eine Ein-/Ausgabeschnittstelle und/oder mindestens eine interne Hardware-Komponente,
**dadurch gekennzeichnet, dass**
der mindestens eine Applikations-Core und der mindestens einen Proxy-Core jeweils mit einer Plattform-Software versehen sind, die dazu ausgelegt ist, sicherzustellen, dass die eigentlich von mindestens den beiden Prozessorkernen aus zugreifbaren Ressourcen nur von genau einem Proxy-Core aus zugreifbar sind, wobei
die Plattform-Software vorgesehen ist, wenn bei einem konkurrierenden Zugreifen durch die Prozessorkerne ein deterministisches Verhalten der adressierten Ressource nicht hardwareseitig garantiert oder offensichtlich ist.

2. Mehrkernprozessor nach dem vorhergehenden Anspruch 1, ferner umfassend:
einen Speicher, insbesondere einen gemeinsam genutzten Speicher, der für einen Zugriff durch den mindestens einen Applikations-Core und den mindestens einen Proxy-Core konfiguriert ist,
mindestens eine Ein-/Ausgabeschnittstelle und/oder mindestens eine interne Hardware-Komponente zum Ein- oder Ausgeben von Daten, auf die auf Grundlage einer Hardwarearchitektur des Mehrkernprozessors von dem mindestens einen Applikations-Core und dem mindestens einen Proxy-Core zugreifbar ist/sind, und
einen Kommunikationsbus zum Verbinden von dem mindestens einen Applikations-Core, dem mindestens einen Proxy-Core, dem Speicher und der mindestens einen Ein-/Ausgabeschnittstelle und/oder der mindestens einen internen Hardware-Komponente, wobei
der mindestens eine Applikations-Core aufgrund der Plattform-Software dazu konfiguriert ist, einen direkten Zugriff des mindestens einen Applikations-Cores auf die mindestens eine Ein-/Ausgabeschnittstelle und/oder die mindestens eine interne Hardware-Komponente zu unterlassen und hieran gerichtete Daten an den Speicher zu leiten, und
der mindestens eine Proxy-Core aufgrund der Plattform-Software dazu konfiguriert ist, die von dem mindestens einen Applikations-Core stammenden Daten vom Speicher aufzunehmen und an die mindestens eine Ein-/Ausgabeschnittstelle und/oder die mindestens eine interne Hardware-Komponente weiterzureichen, vorzugsweise wobei
dem mindestens einen Proxy-Core und/oder dem mindestens einen Applikations-Core statisch dedizierte Bereiche des Speichers für den Datenaustausch zwischen den Prozessorkernen zugeordnet sind.

3. Mehrkernprozessor nach einem der vorhergehenden Ansprüche, wobei der mindestens eine Applikations-Core und der mindestens eine Proxy-Core zueinander heterogene Prozessorkerne bilden.

4. Mehrkernprozessor nach einem der vorhergehenden Ansprüche, wobei die aus Sicht der Hardwarearchitektur gemeinsam nutzbare Ressource nur von einem einzigen Prozessorkern, entweder dem mindestens einen Applikations-Core oder dem mindestens einen Proxy-Core, genutzt wird, wenn ein konkurrierender Zugriff durch mehr als einen Prozessorkern ein deterministisches Verhalten nicht garantiert oder dieses nicht nachweisbar ist.

5. Mehrkernprozessor nach einem der vorhergehenden Ansprüche, wobei der mindestens eine Applikations-Core und der mindestens eine Proxy-Core bestimmte Funktionen ausüben und Aufgaben ausführen, damit eine Zuordnung der aus Sicht der Hardwarearchitektur gemeinsam nutzbaren Ressource so erfolgt, dass jedem Prozessorkern eine gemeinsame deterministische Verwendung oder eine exklusive Verwendung der zugeordneten Ressource möglich ist.

6. Mehrkernprozessor nach einem der vorhergehenden Ansprüche, wobei Zugriffsrechte von Prozessorkernen für die aus Sicht der Hardwarearchitektur gemeinsam nutzbaren Ressource oder sogar weitere Prozessorkerne des Mehrkernprozessor selbst deaktiviert, insbesondere statisch deaktiviert sind, insbesondere wenn eine über mehrere Prozessorkerne hinweg gemeinsam nutzbare Ressource nicht deterministisch verwendbar ist und nicht exklusiv einem Prozessorkern zuordenbar ist.

7. Mehrkernprozessor nach einem der vorhergehenden Ansprüche, wobei ein Prozessorkern, dem eine Ressource exklusiv zugewiesen ist, einem anderen oder sämtlichen anderen Prozessorkernen indirekten Zugriff auf bestimmte Ressourcen zur Verfügung stellt und dabei einen deterministischen Zugriff auf diese Ressource gewährleisten.

8. Mehrkernprozessor nach einem der vorhergehenden Ansprüche, wobei
die Ein-/Ausgabeschnittstelle alle Arten von Binärsignalen, alle Arten von statischen oder dynamischen Signalen aus Analog/Digital- und Digital/Analog-Wandlern, alle Arten von Signalen aus allen Arten von Kommunikationskontrollern, die ein bestimmtes Protokoll erfordern oder nicht, und/oder alle Arten von Signalen aus Speichereinrichtungen, die eine asynchrone Verwaltung erfordern, umfasst, und/oder
die interne Hardware-Komponente passive Komponenten, wie Slaves, oder aktive Komponenten, wie Busmaster, sind, vorzugsweise wobei
die Slaves Register von Prozessorfeatures, wie Timer/Counter, oder Konfigurationsregister, oder Arbeitsspeicher für Programminstruktionen und Programmdaten sind, und/oder
die Busmaster sogenannte Engines sind, die einen Prozessorkern von intensiven Aktivitäten wie Datentransfer, komplexe Berechnungen, Propagierung von Prozessorereignissen, insbesondere DMAs, Checksum-Engines oder Controllers, entlasten.

9. Mehrkernprozessor nach einem der vorhergehenden Ansprüche, wobei mindestens ein Proxy-Core vorgesehen ist, der die Rolle eines Servers übernimmt und dazu ausgelegt ist, die Plattform-Software zumindest teilweise auszuführen, vorzugsweise ausschließlich auszuführen, die den direkten Zugriff auf nun nicht gemeinsam nutzbare Ressourcen übernimmt und die Synchronisierung der Zugriffe auf diese realisiert.

10. Mehrkernprozessor nach einem der vorhergehenden Ansprüche, wobei mindestens ein Applikations-Core vorgesehen ist, der dazu ausgelegt ist, mindestens eine Software-Applikation auszuführen, die nur indirekt mit den nun nicht gemeinsam nutzbaren Ressourcen kommuniziert, indem Daten über den mindestens einen Proxy-Core an die gewünschte Ressource gesendet bzw. hierüber empfangen werden, vorzugsweise wobei hierzu die Funktionen der Plattform-Software des mindestens einen Proxy-Cores Verwendung finden.

11. Mehrkernprozessor nach einem der vorhergehenden Ansprüche, wobei die Plattform-Software einen softwarebasierten Mechanismus zur deterministischen Kommunikation zwischen dem mindestens einen Applikations-Core, insbesondere einer Software-Applikation hierauf, und dem mindestens einen Proxy-Core, insbesondere einer Plattform-Software hierauf, vorsieht, vorzugsweise wobei der Mechanismus auf einer dedizierten Speicher-Komponente basiert, die über ausreichend Bandbreite und mehrere Schnittstelle verfügt, um konkurrierende Zugriffe von mehreren Prozessorkernen deterministisch zu verarbeiten.

12. Mehrkernprozessor nach einem der vorhergehenden Ansprüche, wobei mindestens ein Proxy-Core vorgesehen ist, der dazu ausgelegt ist, an nicht gemeinsam nutzbare Hardware-Ressourcen adressierte Daten von anderen Prozessorkernen, insbesondere eines anderen Applikations-Cores, entgegenzunehmen und diese direkt oder indirekt über einen Zwischenspeicher an die adressierte Ressource zu übertragen, vorzugsweise wobei der mindestens eine Proxy-Core die an die Ressource adressierten Daten anderer Prozessorkerne synchronisiert und/oder zeitlich entkoppelt, um Interferenzen oder ein nicht deterministisches Verhalten zu verhindern.

13. Mehrkernprozessor nach einem der vorhergehenden Ansprüche, wobei der Mehrkernprozessor dazu ausgelegt ist, dass eine Kommunikation mit einer nicht gemeinsam nutzbaren Hardware-Ressource ausschließlich über einen der Ressource zugeordneten Proxy-Core erfolgt.

14. Mehrkernprozessor nach einem der vorhergehenden Ansprüche, wobei der Mehrkernprozessor dazu konfiguriert ist, zum Ausführen der auf dem mindestens einen Proxy-Core und/oder dem mindestens einen Applikations-Core ausgeführten Plattform-Software dem Prozessorkern statisch die hierzu notwendigen Hardware- Ressourcen, wie Programm- und Arbeitsspeicher, Timer, Konfigurationskomponenten, Diagnostikkomponenten, und/oder I/O-Ports, exklusiv zuzuweisen, um eine interferenzfreie Ausführung der auf dem Prozessorkern ausgeführten Plattform-Software zu gewährleisten.

15. Verfahren zum Betreiben eines Mehrkernprozessors nach einem der vorhergehenden Ansprüche in einem Luftfahrzeug, vorzugsweise wobei:
der mindestens eine Applikations-Core und der mindestens eine Proxy-Core jeweils mit einer Plattform-Software versehen sind, die sicherstellt, dass die eigentlich von mindestens den beiden Prozessorkernen aus zugreifbaren Ressourcen nur von genau einem Proxy-Core aus zugreifbar sind, wobei
die Plattform-Software vorgesehen ist, wenn bei einem konkurrierenden Zugreifen durch die Prozessorkerne ein deterministisches Verhalten der adressierten Ressource nicht hardwareseitig garantiert oder offensichtlich ist.
